# EUROPÄISCHE PATENTSCHRIFT

(11) **EP 2 150 700 B1**
(45) Veröffentlichungstag und Bekanntmachung des Hinweises auf die Patenterteilung: **06.01.2016**
(21) Anmeldenummer: 08760368.4
(22) Anmeldetag: 02.06.2008
(51) Int. Cl.: F04B 35/04, H02K 3/38, H02K 1/18

(54) **KÄLTEMITTELKOMPRESSOR**
COOLANT COMPRESSOR
COMPRESSEUR FRIGORIFIQUE

(30) Priorität: 31.05.2007 AT 3462007
(43) Veröffentlichungstag der Anmeldung: 10.02.2010
(73) Patentinhaber: Secop Austria GmbH, 8280 Fürstenfeld (AT)
(72) Erfinder: ZEINLINGER, Helmut, A-8361 Stellberg (AT); SCHÖGLER, Hans, Peter, A-8350 Fehring (AT)
(74) Vertreter: Kliment, Peter
(86) Internationale Anmeldenummer: PCT/EP2008/056782
(87) Internationale Veröffentlichungsnummer: WO 2008/145760

(56) Entgegenhaltungen:
- CH-A5- 587 579
- DD-A1- 123 252
- DE-A1- 2 951 864
- JP-A- 2000 232 746
- JP-A- 2003 097 440
- US-A- 5 957 671

## Beschreibung

Kältemittelkompressor mit einem Verdichtergehäuse, in welchem ein einen Kältemittel verdichtenden Kolben aufweisendes zylindergehäuse und ein den Kolben antreibender E-Motor aneinander befestigt sind, wobei der E-Motor einen mit einer Statorbohrung versehenden Stator umfasst, dessen Spulenkern mit einer Vielzahl an Aufnahmenuten zur Aufnahme einer eine beliebige. Windungs-, Spulengruppen- und Polanzahl aufweisenden Statorwicklung versehen ist, wobei der Spulenkern vorzugsweise aus einer Vielzahl an miteinander verbundenen Statorlamellen aufgebaut ist und wobei die Statorwicklung im Bereich der Stirnseiten des Spulenkerns Wickelköpfe aufweist, welche jeweils außerhalb der Aufnahmenuten angeordnet sind, wobei zumindest eine Stirnseite des Spulenkerns mit einem die Stirnseite im Wesentlichen abdeckenden Isolierelement versehen ist, welches die an dieser zumindest einen Stirnseite angeordneten Wickelköpfe der Statorwicklung gegen den Spulenkern isoliert, wobei das Isolierelement in einem gegenüber der Statorbohrung peripheren Randbereich eine beliebige Anzahl an abstehenden Zusatz-Isolationsabschnitten aufweist, welche die an der zumindest einen Stirnseite angeordneten Wickelköpfe der Statorwicklung gegen benachbarte Abschnitte des Zylindergehäuses, insbesondere gegen am Spulenkern befestigbare Flanschfortsätze des Zylindergehäuses isolieren.

Ein gattungsgemäßer E-Motor weist einen Stator mit genutetem Spulenkern auf, in welchem eine beliebige Anzahl an Wicklungssträngen der Statorwicklung untergebracht ist, um in einem innerhalb des Stators drehbaren Rotor eine Spannung zu induzieren. Am Stator ist ein Zylindergehäuse befestigt, in welchem eine vom Rotor angetriebene Kurbelwelle gelagert ist. Über die Kurbelwelle wird in bekannter Weise ein an einem Zylinderkolben angelenktes Pleuel betätigt, welches eine oszillierende Bewegung des Zylinderkolbens und damit eine Verdichtung eines in das Zylindergehäuse gesaugten Kältemittels bewirkt.

Zum Anlaufen des vorzugsweise als Einphasen-Asynchronmotors ausgebildeten E-Motors ist neben einer Hauptfeldwicklung üblicherweise noch eine zweite, räumlich versetzte Hilfsfeldwicklung am Stator vorgesehen, welche ein gegenüber der Häuptfeldwicklung zeitlich phasenverschobenes Magnetfeld erzeugt. Hauptfeld- und Hilfsfeldwicklung bilden die Statorwicklung. Um im Stator ein Drehfeld zu erzeugen und im Rotor eine für seine Drehbewegung verantwortliche Spannung zu induzieren, müssen die in Hauptfeldwicklung und Hilfsfeldwicklung entstehenden Wechselfelder räumlich und zeitlich zueinander versetzt sein. Die Drehfelddrehzahl ergibt sich hierbei aus Netzfrequenz und Polzahl. Nach Erreichen einer bestimmten Betriebsdrehzahl des Rotors kann die Hilfswicklung durch geeignete Schalter oder stromabhängige Relais oder andere Bauteile mit geeigneter Funktion abgeschaltet werden.

Üblicherweise ist der Stator-Spulenkern aus zahlreichen aufeinandergestapelten und durch Befestigungsmittel bzw. Schraubelemente miteinander verbundenen Blechlamelle ausgebaut. Diese Statorlamellen weisen eine beliebige Anzahl - in vielen Fällen beispielsweise vierundzwanzig - Aufnahmenuten auf, welche durch eine korrespondierende Anzahl an Lamellenzähnen definiert werden. Im Zentrum des Spulenkerns bzw. der Statorlamellen ist eine den Rotor aufnehmende Statorbohrung bzw. eine rotationssymmetrische Ausnehmung vorgesehen, welche durch die Endbereiche der speichenförmig zur Statorbohrungsachse weisenden Lamellenzähne definiert wird.

In den unterschiedlich großen Aufnahmenuten des Spulenkerns bzw. der Statorlamellen sind die Windungen bzw. Wicklungspakete der Statorwicklung gehalten. Hauptfeld und Hilfsfeldwicklung sind hierbei üblicherweise in Form von jeweils zwei eine vorbestimmte Windungsanzahl aufweisenden Spulengruppen am Spulenkern angeordnet. Um einen Statorschluss der Wicklungsdrähte zu vermeiden, sind die Aufnahmenuten mit Isoliereinlagen z.B. aus Polyäthylen versehen.

Im Zuge des Wicklungsprozesses der Statorwicklung ergeben sich im Bereich der Stirnseiten des Spulenkerns relativ großvolumige Wickelköpfe, welche die Baulänge des Stators und somit des Kältemittelkompressor-Gehäuses vergrößern.

Um das Volumen der Wickelköpfe zu verkleinern, ist es bereits bekannt, die Wickelköpfe mittels geeigneter Vorrichtungen zu stauchen. Auf diese Weise werden die Wickelköpfe stabilisiert, Hohlräume zwischen den einzelnen Wicklungsdrähten werden minimiert Und das Volumen der Wickelköpfe verringert.

Zwischen dem Spulenkern bzw. dem aus den Statorlamellen gebildeten. Blechpaket und den Wickelköpfen ist in Montageposition stets ein Luftspalt ausgebildet, welcher so groß sein muss, dass insbesondere während des Hochlaufs keine Berührung zwischen Rotor und Stator stattfindet.

Indem die Wickelköpfe jedoch vom Spulenkern bzw. von den Statorlamellen notwendigerweise beabstandet ist, baut der E-Motor höher und es geht wertvoller Platz im Verdichtergehäuse verloren.

Ein weiterer Nachteil bekannter Stator-Anordnungen bei Kältemittelkompressoren ist es, dass sich auch aufgrund des notwendigen Sicherheits- bzw. Isolationsabstandes der Wickelköpfe zum am Stator verschraubten, metallischen Zylindergehäuse ein erhöhter Platzbedarf des E-Motors und somit ein entsprechend groß dimensioniertes Zylindergehäuse bzw. in weiterer Folge ein entsprechend groß dimensioniertes, die genannten Bauteile in sich bergendes Verdichtergehäuse ergibt. Insbesondere sind es speziell ausgeformte Flanschfortsätze bzw. "Füße" des Zylindergehäuses, welche am Umfang der Wickelköpfe vorbeiführen und mit dem Spulenkern bzw. den Statorlamellen verschraubt werden. Konventionelle Zylindergehäuse weisen hierbei vier, gegebenenfalls auch nur drei zur Befestigung am Stator dienende und die Wickelköpfe umgreifende Flanschfortsätze bzw. "Füße" auf.

Um eine Berührung zwischen den Wickelköpfen und dem Blechpaket sicher zu verhindern, ist es bekannt, dazwischen ein Isolierelement anzuordnen.

Aus der US 5,957,671 B ist es beispielsweise bekannt, zwischen Wickelköpfen und Zylindergehäuse eine Isoliermatte zu befestigen. Diese Isoliermatte ermöglicht es jedoch nicht, die Wickelköpfe kleiner zu bauen.

Aus der DD 123252 ist es bekannt, einen Formteil zwischen Blechpaket und Wickelköpfen anzuordnen, dessen Aufgabe es ist, Wickelköpfe und Statorlamellen voneinander zu isolieren. Auch der Formteil verhindert jedoch eine kompaktere Bauweise solcher Anordnungen.

Aus der JP 2003097440 ist es auch bekannt, ein zwischen den Wickelköpfen und dem Blechpaket angeordnetes Isolierelement mit in Achsrichtung der Statorbohrung abstehenden Zusatz-Isolierelementen zu versehen.

-Keine der genannten Maßnahmen trägt jedoch zu einer merkbaren Verringerung der Bauhöhe der Wickelköpfe bei.

Der vorliegenden Erfindung liegt daher die Aufgabe zugrunde, die genannten Nachteile zu vermeiden und eine möglichst kompakte und somit platzsparende Bauweise der Wickelköpfe und somit des E-Motors sowie des angrenzenden Zylindergehäuses bei voller Gewährleistung des Isolationsschutzes der Statorwicklung zu ermöglichten.

Erfindungsgemäß werden diese Ziele durch einen Kältemittelkompressor mit den kennzeichnenden Merkmalen des Anspruchs 1 erreicht.

Ein gattungsgemäßer Kältemittelkompressor besitzt ein vorzugsweise hermetisch abgedichtetes Verdichtergehäuse, in welchem ein Zylindergehäuse und ein zumeist als Einphasen-Asynchronmotor ausgebildeter E-Motor aneinander befestigt sind. Der E-Motor umfasst einen mit einer Statorbohrung versehenen Stator, dessen Spulenkern mit einer Vielzahl an Aufnahmenuten zur Aufnahme einer eine beliebige Windungs-, Spulengruppen- und Polanzahl aufweisenden Statorwicklung versehen ist, wobei der Spulenkern vorzugsweise aus einer Vielzahl an miteinander verbundenen Statorlamellen aufgebaut ist und wobei die Statorwicklung im Bereich der Stirnseiten des Spulenkerns Wickelköpfe aufweisen, welche jeweils außerhalb der Aufnahmenuten angeordnet sind, wobei zumindest eine Stirnseite des Spulenkerns mit einem die Stirnseite im Wesentlichen abdeckenden Isolierelement versehen ist, welches die Wickelköpfe des Statorwicklung im Betriebszustand des E-Motors gegen den Spulenkern isoliert und wobei das Isolierelement in einem gegenüber der Statorbohrung peripheren Randbereich eine beliebige Anzahl an abstehenden Zusatz-Isolationsabschnitten aufweist, welche die an der zumindest einen Stirnseite angeordneten Wickelköpfe der Statorwicklung gegen benachbarte Abschnitte des Zylindergehäuses, insbesondere gegen am Spulenkern befestigbare Flanschfortsätze des Zylindergehäuses isolieren.

Erfindungsgemäß ist dabei vorgesehen, dass die Wickelköpfe der Statorwicklung an das Isolierelement angepresst sind. Dadurch ergibt sich gegenüber herkömmlichen Wickelköpfen eine große Platzersparnis und der gesamte Kältemittelkompressor baut kleiner. Die Wickelköpfe können aufgrund der vom Isolierelement gebildeten, dielektrischen Zwischenlage direkt an den Spulenkern- bzw. Statorlamellen-Aufbau aufgesetzt und näher an den Spulenkern herangeführt werden. Dadurch ist eine kleinere bzw. kompaktere Bauweise des E-Motors bei gleich bleibenden Leistungskennzahlen und somit ein bedeutender Platzgewinn im Verdichtergehäuse bzw. auch eine kleinere Bauweise des Verdichtergehäuses möglich.

Gleichzeitig kann auf diese Weise der Isolationsabstand der Wickelköpfe zum Zylindergehäuse, insbesondere der Isolationsabstand der Wickelköpfe zu den am Stator befestigbaren Flanschfortsätzen bzw. "Füßen" des Zylindergehäuses stark verringert werden. Die E-Motor-Zylindergehäuse-Anordnung kann somit bei gleich bleibenden Leistungskennzahlen kompakter bzw. kleiner gebaut werden.

In einer bevorzugten Ausführungsform der Erfindung ist das Isolierelement im Wesentlichen plattenförmig ausgebildet. Ein plattenförmiges Isolierelement ist einfach zu fertigen und eignet sich zur platzsparenden Auflage an der dafür vorgesehenen Stirnseite des Spulenkerns.

Indem der Umfangsverlauf des Isolierelementes in einer besonders bevorzugten Ausführungsform im Wesentlichen kongruent zum Umfangsverlauf der Statorlamellen bzw. zur (in Draufsicht bzw. in einer der Statorbohrungsachse folgenden Blickrichtung betrachteten) Querschnittsgeometrie des Spulenkerns ausgebildet ist, kann eine optimale Isolierung der gesamten relevanten Fläche des Spulenkerns bzw. der zum Wicklungskopf weisenden Statorlamelle erfolgen.

Eine weitere bevorzugte Ausführungsform der Erfindung sieht vor, dass die Zusatz-Isolationsabschnitte beweglich, vorzugsweise klappbar am Isolierelement angeordnet. Auf diese Weise kann während der Montage des Zylindergehäuses am E-Motor eine optimale Adaption der Endlage der Zusatz-Isolationsabschnitte erfolgen.

Eine besonders einfache und wirtschaftliche Fertigungsweise ergibt sich, wenn die Zusatz-Isolationsabschnitte, in einer bevorzugten Ausführungsform einstückig mit dem Isolierelement ausgebildet sind. So können die Zusatz-Isolationsabschnitte etwa als vom Isolierelement umgebogene Laschenelemente ausgeführt sein.

Bevorzugterweise sind das Isolierelement bzw. die Zusatz-Isolatronsabschnitte aus PET (Polyäthylen) gefertigt. PET weist eine hohe elektrische Durchschlagsfestigkeit auf und ermöglicht daher eine dünne und somit platzsparende Ausführung des Isolierelementes bzw. der Zusatz-Isolationsabschnitte. Herbei weisen das Isolierelement bzw. die Zusatz-Isolationsabschnitte vorzugsweise eine Schichtdicke < 2 mm auf.

In einer bevorzugten Ausführungsvariante der vorliegenden Erfindung weist das Zylindergehäuse vier, drei, oder zwei am Spulenkern befestigbare/verschraubbare Flanschfortsätze auf, welche jeweils durch einen beschriebenen Zusatz-Isolationsabschnitt gegen die Wickelköpfe isoliert werden. Insbesondere bei der Vorsehung von lediglich zwei am Spulenkern befestigbaren/verschraubbaren Zylindergehäuse-Flanschfortsätzen ergibt sich gegenüber bekannten Zylindergehäusen mit üblicherweise vier der Befestigung/Verschraubung am Spulenkern dienenden Zylindergehäuse-Flanschfortsätzen eine beträchtliche Einsparung an Fertigungsmaterial bzw. an Verschraubungskomponenten.

Die Erfindung wird nun anhand eines Ausführungsbeispiels näher erläutert. Dabei zeigt:
- Fig.1: eine schematische Darstellung eines Kältemittelkreislaufs
- Fig.2: einen Stator in Schrägansicht (mit Zusatz-Isolationselementen)
- Fig.3: einen Stator in Schrägansicht (ohne Zusatz-Isolationselemente)
- Fig.4: einen erfindungsgemäßen Stator in partiell geschnittener axonometrischer Ansicht
- Fig.5: ein an Stirnseiten des Stators anbringbares Isolierelement in Schrägansicht
- Fig.6: eine Statorlamelle in Draufsicht
- Fig.7: eine alternative Ausführung der Statorlamelle in Draufsicht
- Fig.8: eine weitere alternative Ausführung der Statorlamelle in Draufsicht
- Fig.9: einen mit einer Hauptfeldwicklung versehenen Stator in Schrägansicht (bei Ausblendung der Hilfsfeldwicklung)
- Fig.10: einen mit einer Hauptfeldwicklung versehenen Stator' in Draufsicht (bei Ausblendung der Hilfswicklung)
- Fig.11: einen mit einer Hilfswicklung versehenen Stator in Schrägansicht (bei Ausblendung der Hauptfeldwicklung)
- Fig.12: einen mit einer Hilfsfeldwicklung versehenen Stator in Draufsicht (bei Ausblendung der Hauptfeldwicklung)
- Fig.13: eine schematische Darstellung eines mit einem Rotor versehenen Stators in Schnittansicht
- Fig.14: einen fertig gewickelten Stator mit Hauptfeld- und Hilfsfeldwicklung in Draufsicht
- Fig.15: ein am Stator angeordnetes Zylindergehäuse in Schrägansicht
- Fig.16: ein am Stator angeordnetes Zylindergehäuse in Draufsicht gemäß Blickrichtung "B" aus Fig.15
- Fig.17: eine Detaildarstellung eines Isolierelementes samt Zusatz-Isolationsabschnitt gemäß Schnittführung A-A aus Fig.16
- Fig.18: einen mit einem Isolierelement und zwei Zusatz-Isolationsabschnitten versehenen Stator in Draufsicht (ohne Zylindergehäuse)
- Fig.19: einen mit einem Isolierelement und zwei Zusatz-Isolationsabschnitten versehenen Stator gemäß Schnittführung B-B aus Fig.18 (ohne Zylindergehäuse)
- Fig.20: ein Isolierelement und vier Zusatz-Isolationsabschnitten in Schrägansicht
- Fig.21: eine bevorzugte Ausführungsform des Isolierelementes mit drei Zusatz-Isolationsabschnitten in Schrägansicht

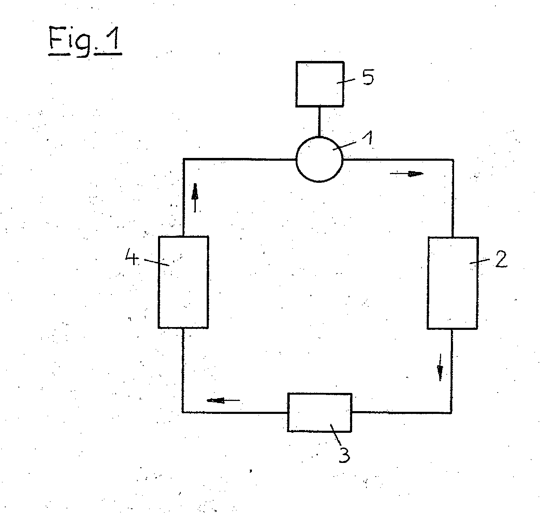

In Fig.1 ist in schematischer Weise ein Kältesystem dargestellt, welches einen hermetisch gekapselten Kältemittelkompressor 1, einen Kondensator 2, ein Expansionsventil 3 und einen Verdampfer 4 aufweist. Der Kältemittelkompressor 1 ist von einem als Einphasen-Asynchronmotor ausgebildeten E-Motor 5 angetrieben, welcher in einem vorzugsweise hermetisch gekapselten Verdichtergehäuse des Kältemittelkompressors 1 angeordnet ist.

Ein derartiges Kältesystem ist hinreichend bekannt: Der Kältemittelkompressor 1 verdichtet ein gasförmiges Kältemittel, das aus dem Verdampfer 4 einer Kolben/Zylindereinheit zugeführt wird. Beim Verdichten des Kältemittels steigen Druck und Temperatur an. In der Folge wird das Kältemittel im Kondensator 2 in einen flüssigen Zustand übergeführt und schließlich durch das Expansionsventil 3 dem Verdampfer 4 zugeführt, wo es verdampft. Die hierzu notwendige Verdampfungswärme wird der Umgebung bzw. einem Kühlraum entzogen, der dadurch gekühlt wird. Schließlich wird das gasförmige Kältemittel aus dem Verdampfer 4 wiederum in den Kältemittelkompressor 1 geführt und durchläuft einen neuen Verdichtungs- und Expansionszyklus.

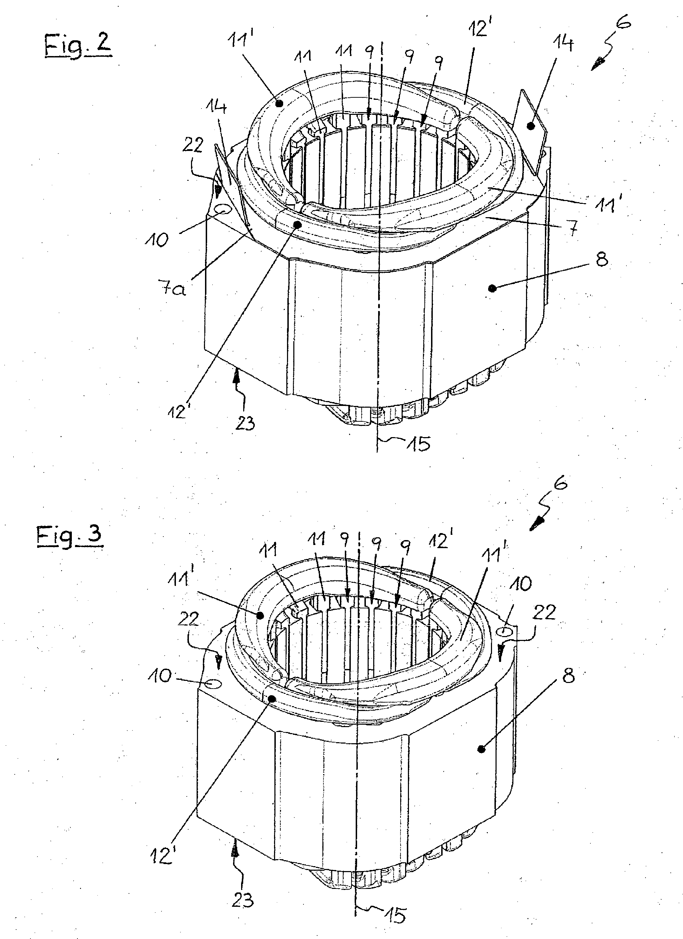

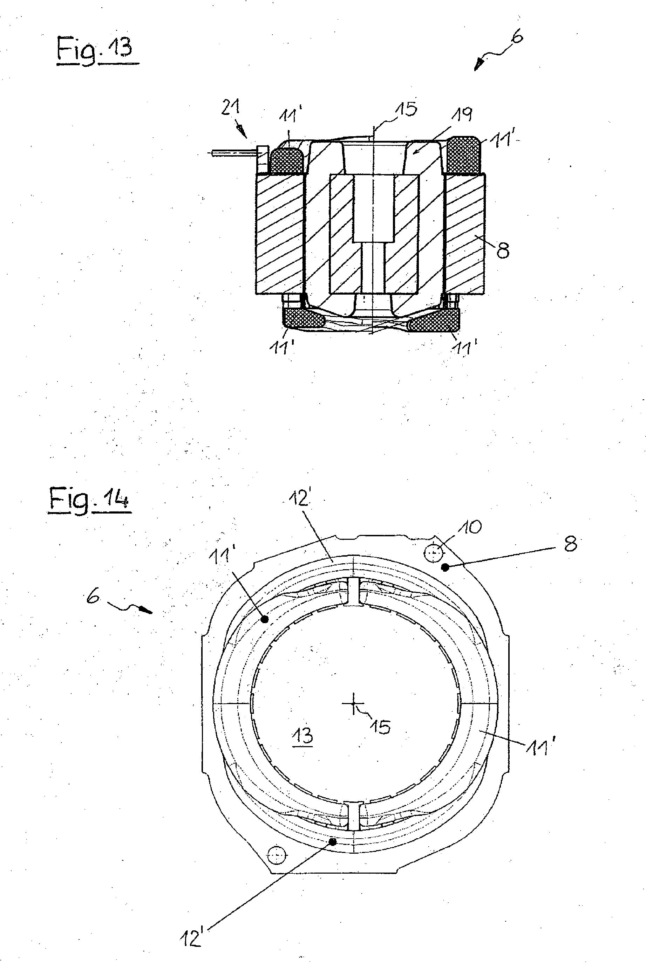

Fig.2 zeigt eine erfindungsgemäße Statoranordnung des E-Motors 5, wobei zwecks besserer Übersichtlichkeit auf die Darstellung eines im Inneren des Stators 6 angeordneten, um eine Statorbohrungsachse 15 drehbaren Rotors 19 verzichtet wurde (ein im vorliegenden Zusammenhang nicht erfindungswesentlicher, in die Statoranordnung integrierter Rotor 19 ist schematisch in Fig.13 abgebildet).

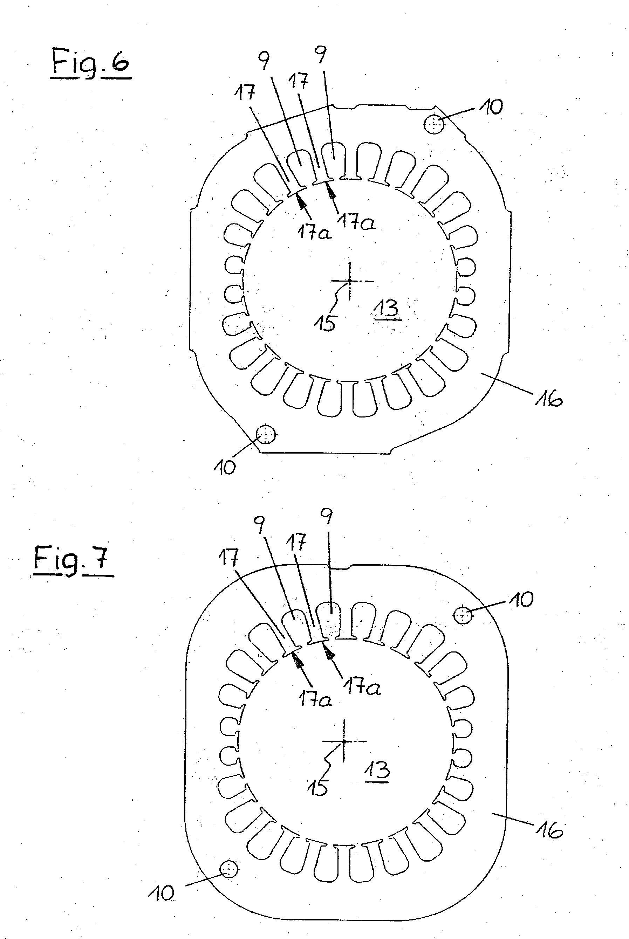

Der Stator 6 umfasst einen mit Aufnahmenuten 9 versehenen Spulenkern 8, durch dessen Mitte eine Statorbohrung 13 hindurchführt, die durch die Endbereiche 17ä einer Vielzahl an Lamellenzähnen 17 räumlich definiert ist (siehe Fig.6). Die ebenfalls durch die Geometrie der Lamellenzähne 17 definierten und kreisförmig um die Statorbohrung 13 bzw. um die Statorbohrungsachse 15 gruppierten Aufnahmenuten 9 des Spulenkerns 8 nehmen Wicklungspakete einer aus Hauptfeldwicklung 11 und Hilfsfeldwicklung 12 bestehenden Statorwicklung auf.

Der Spulenkern 8 ist zwecks Verhinderung von Wirbelströmen aus zahlreichen Eisenblechen bzw. Statorlamellen 16 hergestellt, welche in bekannter Weise aufeinandergestapelt und mittels durch Aufnahmebohrungen 10 hindurchführbarer Befestigungsmittel miteinander verbünden sind. Ebenso kann der Spulenkern 8 jedoch auch in Form eines massiven Eisenkerns ausgeführt sein. Um einen Statorschluss der Wicklungsdrähte zu vermeiden, sind die Aufnahmenuten 9 des Spulenkerns 8 mit (nicht dargestellten) Isoliereinlagen versehen.

Die Wicklungspakete der Statorwicklung 11,12 sind aus Backlackdraht aufgebaut, welcher neben einer Lackisolierung noch eine weitere, thermohärtende Schicht aufweist, welche die einzelnen Drähte der Wicklungspakete nach Aufwärmung auf eine vorgeschriebene Verbackungstemperatur zusammenklebt, um die Wicklungspakete zu stabilisieren. Selbstverständlich kann auch eine konventionelle Wicklungsisolation mittels Imprägnierlacken oder Tränkharzen vorgenommen werden.

Obwohl Hauptfeldwicklung 11 und Hilfsfeldwicklung 12 im vorliegenden Ausführungsbeispiel jeweils in Form von zwei auf dem Spulenkern 8 angeordneten, zweipoligen Wicklungen ausgeführt sind, sei angemerkt, dass der Motor 5 grundsätzlich eine beliebige Spulengruppen- bzw. Polanzahl aufweisen kann. Die Hilfswicklung 11 bewirkt in Verbindung mit der dazu räumlich versetzten Hauptfeldwicklung 12, dass der Rotor 19 zufolge einer Spannungsinduktion aus dem Statormagnetfeld um die Statorbohrungsachse 15 umläuft und in allgemein bekannter Weise beschleunigt.

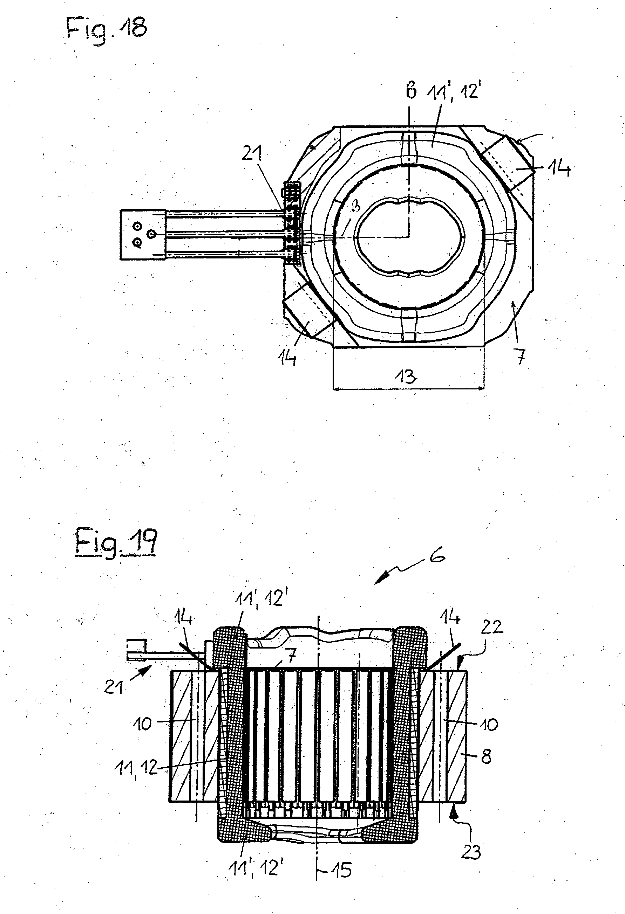

Wie in Fig. 2 und Fig.3 ersichtlich, weist der Stator 6 bzw. dessen Spulenkern 8 zwei im Wesentlichen ebene Stirnseiten 22, 23 auf, über welche die Wicklungsstränge der Hauptfeld- und Hilfsfeldwicklung 11,12, welche auch als Wickelköpfe 11',12' bezeichnet werden, mit einer gewissen Überstandslänge hinausragen. In Fig. 18 ist hierbei in schematischer Weise eine Anspeisungsvorrichtung 21 angedeutet, mittels welcher die Hauptfeld- und Hilfsfeldwicklungen 11,12 in bekannter Weise an ein Wechselstromnetz, angeschlossen werden.

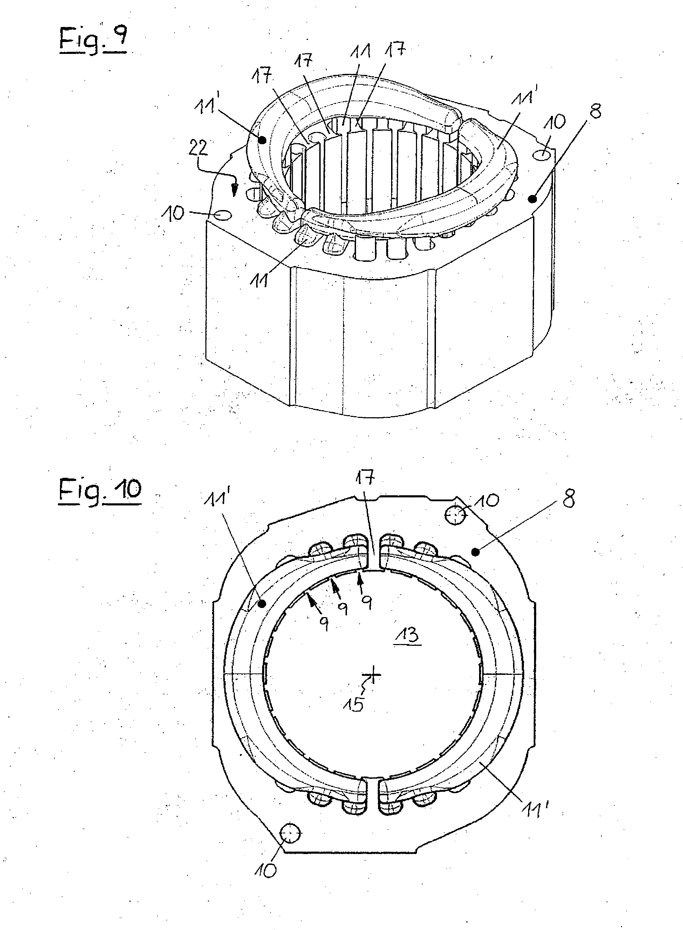

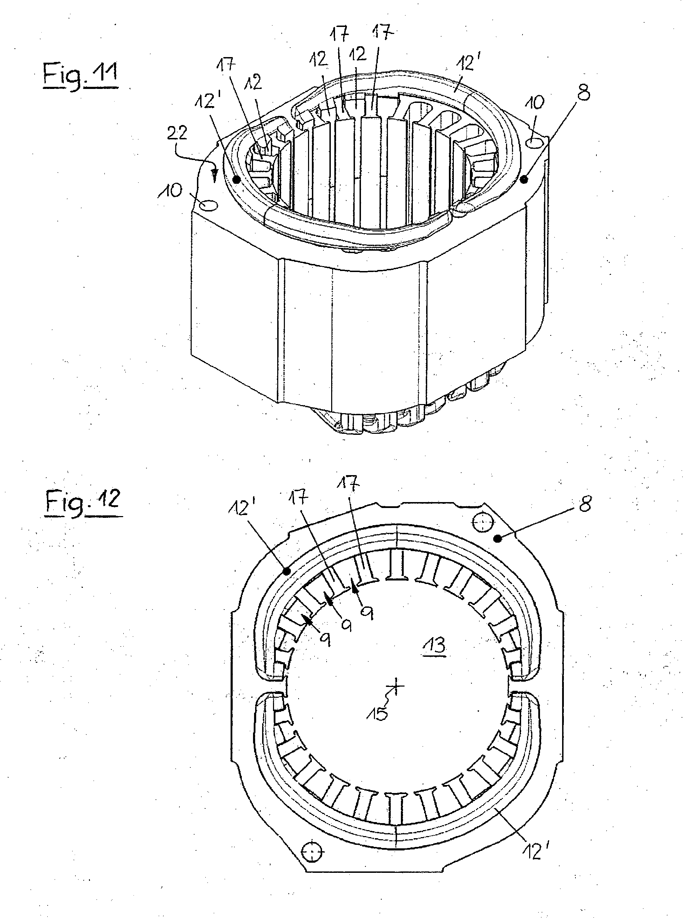

Um die Anordnung der Hauptfeld- und Hilfsfeldwicklungen 11,12 am Stator 6 besser nachvollziehen zu können, ist in den Figuren 9 und 10 eine am Spulenkern 8 angebrachte Hauptfeldwicklung 11 unter Verzicht einer Darstellung der komplementären Hilfsfeldwicklung 12 in Schrägansicht bzw. in Draufsicht abgebildet. Analog dazu ist in den Figuren 11 und 12 eine am Spulenkern 8 angebrachte Hilfswicklung 12 unter Verzicht einer Darstellung der Hauptfeldwicklung 11 in Schrägansicht bzw. in Draufsicht abgebildet.

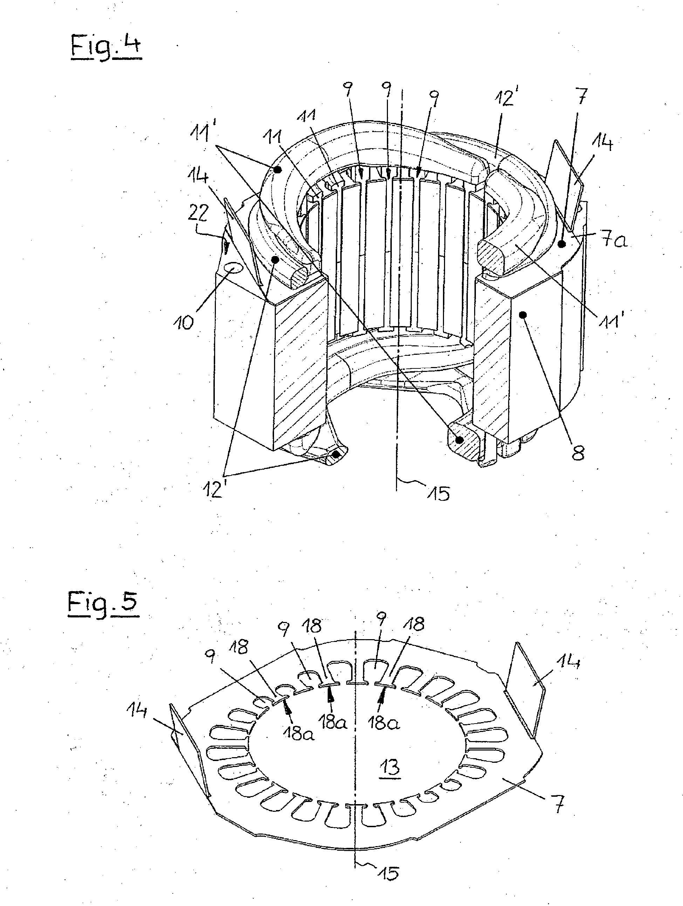

Ein fertig gewickelter, in partieller Schnittansicht dargestellter Stator 6 ist in Fig.4 ersichtlich (siehe auch eine entsprechende Draufsicht gemäß Fig.14)

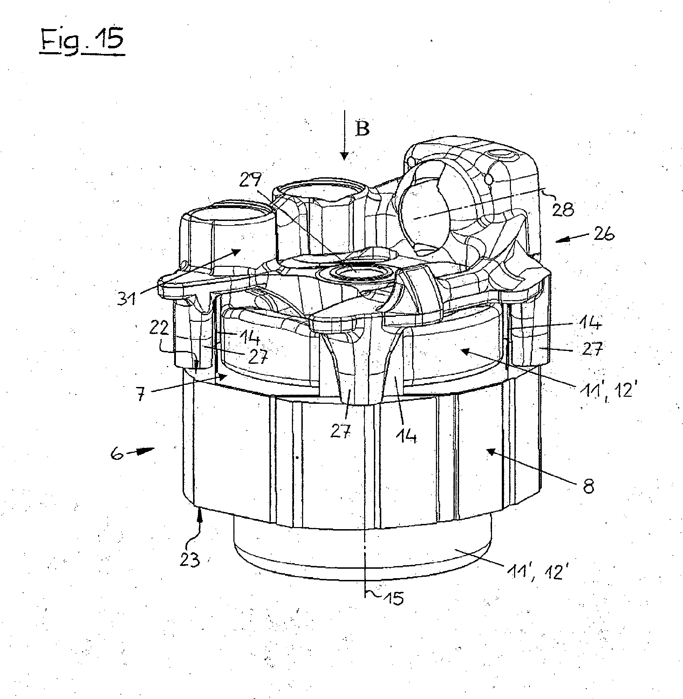

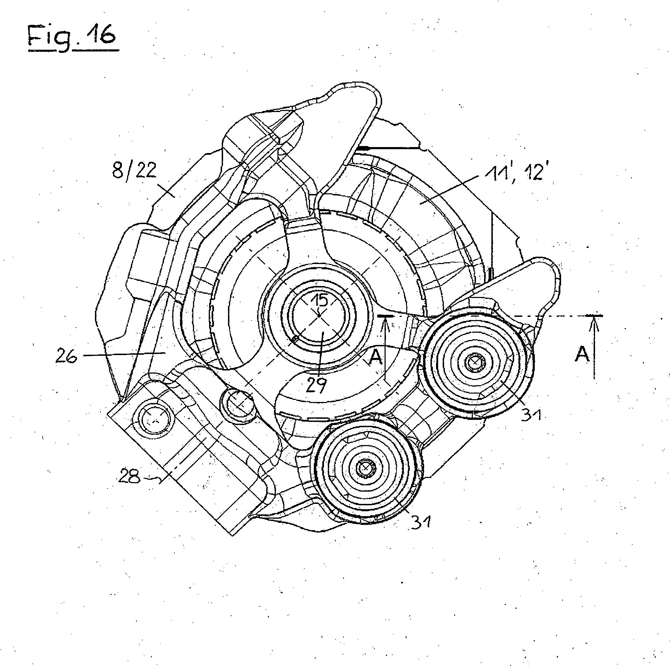

Am in beschriebener Weise gewickelten Stator 6 ist ein in den Figuren 15 und 16 dargestelltes Zylindergehäuse 26 befestigt, in welchem eine vom Rotor 19 angetriebene (nicht dargestellte) Kurbelwelle in einem Lagerbereich 29 gelagert ist. Der Rotor 19 weist üblicherweise einen Magnetkern und eine Käfigwicklung auf und treibt über die Kurbelwelle ein (ebenfalls nicht dargestelltes) Kolbenpleuel an, welches wiederum eine lineare Bewegung eines Zylinderkolbens längs einer Zylinderachse 28 und damit-eine Verdichtung eines in das Zylindergehäuse 26 gesaugten Kältemittels bewirkt.

Es sei angemerkt, dass das im vorliegenden Ausführungsbeispiel gemäß Fig.15 an der oberen Stirnseite 22 des Stators 6 angebrachte, Druckschallkammern 31 aufweisende Zylindergehäuse 26 ebenso an der unteren Stirnseite 23 des Stators 6 angeordnet sein kann. In solchem Ausführungsfalle wäre das in Fig.15 dargestellte Zylindergehäuse 26 um eine horizontale Achse nach unten gespiegelt und an die untere Stator-Stirnseite 23 angrenzend vorzustellen. Es versteht sich des weiteren, dass das in den Figuren 15-17 ersichtliche Zylindergehäuse 26 lediglich beispielhaft dargestellt ist und im vorliegenden Zusammenhang auch vollkommen anders ausgestaltet sein kann, insbesondere auf eine Vorsehung der Druckschallkammern 31 verzichtet werden kann.

Die durch die Aufnahmebohrungen 10 der Statorlamellen 16 hindurchführenden Befestigungsmittel bzw. Schraubelemente sind an der dem Zylindergehäuse 26 abgewandten Stirnseite des Spulenkerns 8, im vorliegenden Ausführungsbeispiel also an der unteren Stirnseite 23, in einer an sich bekannten Aufhängevorrichtung gelagert. Bei der Aufhängevorrichtung handelt es sich zumeist um Druckfederelemente, welche in am Boden des Verdichtergehäuses .angeordnete Stifte oder Lagerbuchsen eingreifen (nicht dargestellt).

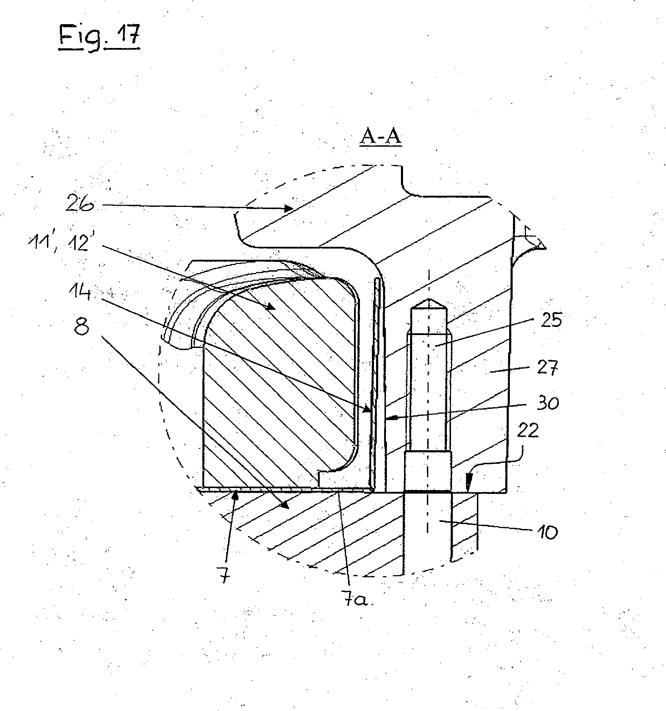

Ungeachtet der konkreten Ausführungsvariante sind es speziell ausgeformte Flanschfortsätze bzw. "Füße" 27 des Zylindergehäuses 26, welche am Umfang der jeweiligen Wickelköpfe 11',12' vorbeiführen und mit dem Spulenkern 8 bzw. mit den Statorlamellen 16 verschraubt oder anderweitig verbunden werden. Gemäß Fig.17 weist hierbei jeder Zylindergehäuse-Flanschfortsatz 27 eine Bohrung 25 auf, deren Achse mit der Achse einer korrespondierenden Aufnahmebohrung 10 im Spulenkern 8 bzw. in den Statorlamellen 16 fluchtet. Durch die Aufnahmebohrung 10 ist ein (nicht dargestelltes) Schraubelement hindurchführbar und mit einem Gewindeabschnitt der Sacklochbohrung 25 verschraubbar.

Um die Wickelköpfe 11',12' gegenüber dem Spulenkern 8 zu isolieren und erfindungsgemäß an diesen anpressen zu können, ist zumindest an einer Stirnseite 22, 23 des Spulenkerns 8 ein in Fig.5 dargestelltes, im Wesentlichen plattenförmiges Isolierelement 7 angeordnet. Das vorzugsweise aus einem Kunststoff wie PET ausgeführte und eine Schichtdicke von ca. 1,7 mm aufweisende Isolierelement 7 deckt die jeweilige Stirnseite 22, 23 des Spulenkerns 8 im Betriebszustand des E-Motors 5 im Wesentlichen ab und isoliert somit die Wickelköpfe 11', 12' der Statorwicklung gegen den Spulenkern 8.

Das erfindungsgemäße Anpressen der Wickelköpfe 11',12' an das Isolierelement 7 ermöglicht somit die Reduktion der axialen Länge der E-Motor-Zylindergehäuse-Anordnung und eine kompaktere Bauweise.

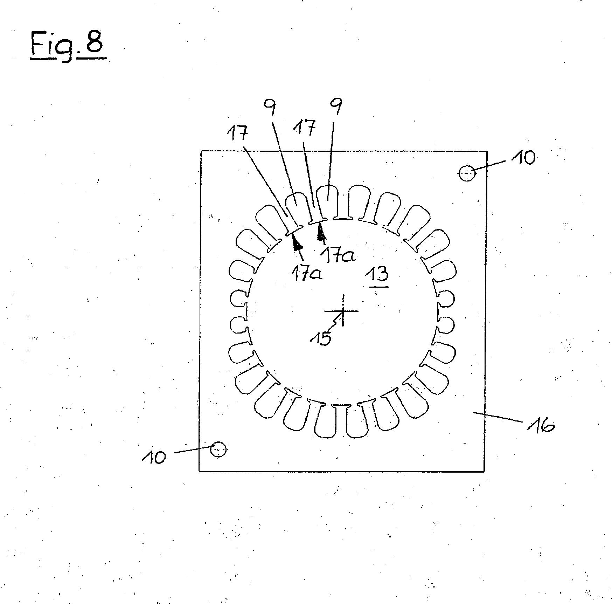

Gemäß dem vorliegenden Ausführungsbeispiel verläuft der in Fig.5 ersichtliche Umfangsverlauf des Isolierelementes 7 im Wesentlichen kongruent zum in den Figuren 6-8 ersichtlichen Umfangsverlauf der Statorlamellen 16 bzw. zur Querschnittsgeometrie des Spulenkerns 8. Das Isolierelement 7 weist also analog zur Geometrie der Statorlamellen 16 eine Vielzahl an speichenförmig zur zentrischen Statorbohrung 13 angeordneten Isolierelementenzähnen 18 auf, welche die Aufnahmenuten 9 konstituieren, wobei die Isolierelementezähne 18 bzw. deren Endbereiche 18a in Montagelage im Wesentlichen deckungsgleich mit den Lamellenzähnen 17 bzw. deren Endbereichen 17a verlaufen, um die Windungen bzw. Wicklungspakete der Hauptfeld- und Hilfsfeldwicklungen 11,12 aufzunehmen.

Das Isolierelement 7 weist 'in einem gegenüber der Statorbohrung 13 peripheren Randbereich 7a eine beliebige Anzahl an abstehenden, vorzugsweise klappbaren Zusatz-Isolationsabschnitten 14 auf, welche den die Wickelköpfe 11', 12' der Statorwicklung 11, 12 gegen benachbarte Abschnitte des Zylindergehäuses 26, insbesondere gegen die bereits erwähnten, den die Wickelköpfe 11',12' umgreifenden, am Spulenkern 8 befestigbaren Flanschfortsätze 27 des Zylindergehäuses 26 isolieren.

Anhand von Fig.17, welche eine partielle Schnittansicht gemäß Linie A-A aus einer in Fig.16 dargestellten Draufsicht auf die E-Motor-Zylindergehäuse-Anordnung zeigt, ist nachvollziehbar, wie der Isolationsabstand der Wickelköpfe 11',12' zu den am Stator-Spulenkern 8 befestigbaren Flanschfortsätzen 27 des Zylindergehäuses 26 dadurch gegenüber konventionellen Anordnungen beträchtlich verringert werden kann.

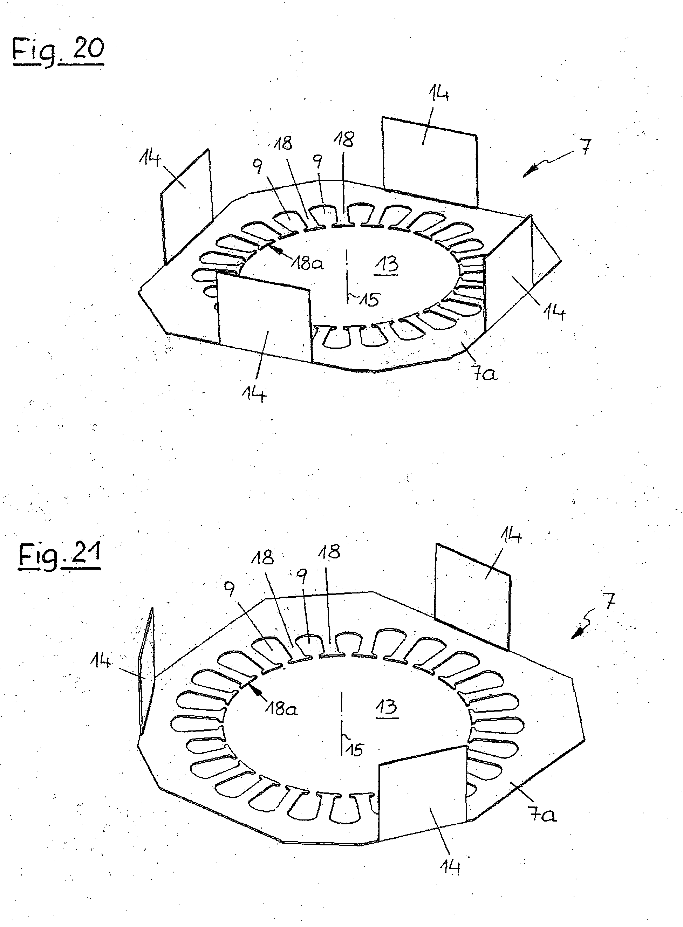

Im vorliegenden Ausführungsbeispiel werden die der oberen Stirnseite 22 zuweisenden Wickelköpfe 11',12' von drei Zylindergehäuse-Flanschfortsätzen 27 umgriffen bzw. es weist jede Statorlamelle 16 drei korrespondierende Aufnahmebohrungen 10 auf. Ein entsprechendes, drei Zusatz-Isolationsabschnitte 14 aufweisendes Isolierelement 7 ist in Fig.21 abgebildet.

In einer besonders bevorzugten Ausführungsvariante weisen die Statorlamellen 16 jeweils nur zwei Aufnahmebohrungen 10 auf, während das Zylindergehäuse 26 zwei angeformte Flanschfortsätze 27 besitzt, welche mit zu den Statorlamellen-Aufnahmebohrungen 10 korrespondierenden Gewinde-(Sackloch)-Bohrungen 25 versehen sind. Ein entsprechendes, lediglich zwei Zusatz-Isolationsabschnitte 14 aufweisendes Isolierelement 7 ist in Fig.5 abgebildet (siehe auch ein entsprechendes, in Montagelage befindliches Isolierelement 7 gemäß Fig.18 und 19).

Selbstverständlich kann ein Isolierelement 7 auch vier Zusatz-Isolationsabschnitte 14 aufweisen, um die Wickelköpfe 11', 12' gegen ein in konventioneller Weise mit vier Flanschfortsätzen 27 versehenes Zylindergehäuse 26 zu isolieren (siehe Fig.20).

Vorzugsweise sind die Aufnahmebohrungen 10 und somit die korrespondierenden Zylindergehäuse-Flanschfortsätze 27 bzw. die Zusatz-Isolationsabschnitte 14 des Isolierelementes 7 jeweils in einem Eckbereich des Spulenkerns 8 angeordnet, so wie z.B. in Fig.2 ersichtlich.

Die Zusatz-Isolationsabschnitte 14 sind bevorzugterweise einstückig mit dem Isolierelement 7 ausgebildet, und können durch eine Sollbiegekante mit dem Isolierelement 7 verbunden sein, können jedoch auch separat von diesem gefertigt und nachträglich am Isolierelement 7 angebracht sein. In den vorliegenden Ausführungsbeispielen gemäß den Figuren 5, 20 und 21 sind die Zusatz-Isolationsabschnitte 14 als vom Isolierelement 7 umgebogene Laschenelemente ausgeführt und im Wesentlichen rechteckig ausgebildet.

Es versteht sich jedoch, dass viele einer jeweiligen Zylindergehäuse-Geometrie entsprechende Adaptionen der Zusatz-Isolationsabschnitte 14 denkbar sind, z.B. auch runde oder polygonale sowie konvexe oder konkave Formen, ohne von der grundsätzlichen Idee abzuweichen.

Wie in einer Schnittdarstellung des Stators 6 gemäß Fig.19 ersichtlich, stehen die Zusatz-Isolationsabschnitte 14 unter einem Winkel von ca. 45° vom in Montagelage im Wesentlichen horizontal angeordneten Isolierelement 7 ab und werden erst beim Aufsetzen des Zylindergehäuses 26 auf den Stator 6 nach oben in Richtung des Zylindergehäuses 26 gebogen, um dann in einer im Wesentlichen rechtwinkelig zum an der oberen Spulenkern-Stirnseite 22 verlaufenden Endlage gemäß Fig.17 zu verbleiben. In dieser Endlage verlaufen die Zusatz-Isolationsabschnitte 14 somit im Wesentliche parallel zu einer den Wickelköpfen 11',12' zugewandten Innenseite 30 der Flanschfortsätze 27 des Zylindergehäuses 26 und schirmen diese gegen den Umfangsbereich der Wickelköpfe 11', 12' ab.

Zur Realisierung einer derartigen Beweglichkeit bzw. Klappbarkeit der am Isolierelement 7 angeordneten Zusatz-Isolationsabschnitte 14 können diese einen vordefinierten Scharnierbereich, z.B. in Form einer gekerbten Biegekante aufweisen.

## Patentansprüche

1. Kältemittelkompressor mit einem Verdichtergehäuse, in welchem ein einen Kältemittel verdichtenden Kolben aufweisendes Zylindergehäuse (26) und ein den Kolben antreibender E-Motor (5) aneinander befestigt sind, wobei der E-Motor einen mit einer Statorbohrung (13) versehenen Stator (6) umfasst, dessen Spulenkern (8) mit einer Vielzahl an Aufnahmenuten (9) zur Aufnahme einer eine beliebige Windungs-, Spulengruppen- und Polanzahl aufweisenden Statorwicklung (11, 12) versehen ist, wobei der Spulenkern (8) vorzugsweise aus einer Vielzahl an miteinander verbundenen Stätorlamellen (16) aufgebaut ist und wobei die Statorwicklung (11, 12) im Bereich der Stirnseiten (22, 23) des Spulenkerns. (8) Wickelköpfe (11' ,12') aufweist, welche jeweils außerhalb der Aufnahmenuten (9) angeordnet sind, wobei zumindest eine Stirnseite (22, 23) des Spulenkerns (8.) mit einem die Stirnseite (22, 23) im Wesentlichen abdeckenden Isolierelement (7) versehen ist, welches die an dieser zumindest einen Stirnseite angeordneten Wickelköpfe (11',12') der Statorwicklung (11,12) gegen den Spulenkern (8) isoliert, wobei das Isolierelement (7) in einem gegenüber der Statorbohrung (13) peripheren Randbereich (7a) eine beliebige Anzahl an abstehenden Zusatz-Isolationsabschnitten (14) aufweist, welche die an der zumindest einen Stirnseite angeordneten Wickelköpfe (11',12') der Statorwicklung (11,12) gegen benachbarte Abschnitte des Zylindergehäuses (26), insbesondere gegen am Spulenkern (8) befestigbare Flanschfortsätze (27) des Zylindergehäuses (26) isolieren, **dadurch gekennzeichnet, dass** die Wickelköpfe (11',12') der Statorwicklung (11,12) an das Isolierelement (7) angepresst sind.

2. Kältemittelkompressor nach Anspruch 1, **dadurch gekennzeichnet, dass** das Isolierelement (7) im Wesentlichen plattenförmig ausgebildet ist.

3. Kältemittelkompressor nach Anspruch 1 oder 2, **dadurch gekennzeichnet, dass** der Umfangsverlauf des Isolierelementes (7) im Wesentlichen kongruent zum Umfangsverlauf des Spulenkerns (8) bzw. der Statorlamellen (16) ausgebildet ist.

4. Kältemittelkompressor nach einem der Ansprüche 1 bis 3, **dadurch gekennzeichnet, dass** die Zusatz-Isolationsabschnitte (14) beweglich, vorzugsweise klappbar am Isolierelement (7) angeordnet sind.

5. Kältemittelkompressor nach einem der Ansprüche 1 bis 4, **dadurch gekennzeichnet, dass** die Zusatz-Isolationsabschnitte (14) einstückig mit dem Isolierelement (7) ausgebildet sind.

6. Kältemittelkompressor nach einem der Ansprüche 1 bis 5, **dadurch gekennzeichnet, dass** das Isolierelement (7) bzw. die Zusatz-Isolationsabschnitte (14) aus PET gefertigt sind.

7. Kältemittelkompressor nach einem der Ansprüche 1 bis 6, **dadurch gekennzeichnet, dass** das Zylindergehäuse (26) vier öder drei, vorzugsweise zwei am Spulenkern (8) befestigbare/verschraubbare Flanschfortsätze (27) aufweist, welche jeweils durch einen Zusatz-Isolationsabschnitt (14) gegen die Wickelköpfe (11', 12') isoliert werden.

8. Kältemittelkompressor nach einem der Ansprüche 1 bis 7, **dadurch gekennzeichnet, dass** das Isolierelement (7) bzw. die Zusatz-Isolationsabschnitte (14) eine Schichtdicke < 2 mm aufweisen.

## Claims

1. Refrigerant compressor having a compressor housing in which a cylinder housing (26) having a piston which compresses a refrigerant and an electric motor (5) which drives the piston are fastened to one another, the electric motor comprising a stator (6) provided with a stator bore (13), the coil core (8) of which is provided with a plurality of receiving grooves (9) for accommodating a stator winding (11, 12) having any given number of windings, coil groups, and poles, wherein the coil core (8) is preferably composed of a plurality of interconnected stator segments (16) and wherein the stator winding (11, 12) in the region of the end faces (22, 23) of the coil core (8) has winding heads (11', 12') which are each situated outside the receiving grooves (9), at least one end face (22, 23) of the coil core (8) being provided with an insulating element (7) which essentially covers the end face (22, 23) and which insulates the winding heads (11', 12') of the stator winding (11, 12) situated on this at least one end face with respect to the coil core (8), wherein the insulating element (7) has an arbitrary number of projecting additional insulating sections (14) in a peripheral edge region (7a) opposite the stator bore (13) which insulate the winding heads (11', 12') of the stator winding (11, 12) situated on the at least one end face with respect to adjacent sections of the cylinder housing (26), in particular with respect to flange extensions (27) of the cylinder housing (26) which may be attached to the coil core (8), **characterized in that** the winding heads (11', 12') of the stator winding (11, 12) are pressed against the insulating element (7).

2. Refrigerant compressor according to Claim 1, **characterized in that** the insulating element (7) essentially has a plate-shaped design.

3. Refrigerant compressor according to Claim 1 or 2, **characterized in that** the peripheral course of the insulating element (7) is essentially congruent with the peripheral course of the coil core (8) or the stator segments (16).

4. Refrigerant compressor according to one of Claims 1 through 3, **characterized in that** the additional insulating sections (14) are situated so as to be movable, preferably foldable, on the insulating element (7).

5. Refrigerant compressor according to one of Claims 1 through 4, **characterized in that** the additional insulating sections (14) are designed as one piece with the insulating element (7).

6. Refrigerant compressor according to one of Claims 1 through 5, **characterized in that** the insulating element (7) or the additional insulating sections (14) are made of PET.

7. Refrigerant compressor according to one of Claims 1 through 6, **characterized in that** the cylinder housing (26) has four or three, preferably two, flange extensions (27) which may be fastened or screwed to the coil core (8) and which may each be insulated from the winding heads (11', 12') by means of an additional insulating section (14).

8. Refrigerant compressor according to one of Claims 1 through 7, **characterized in that** the insulating element (7) or the additional insulating sections (14) have a layer thickness of < 2 mm.

## Revendications

1. Compresseur à réfrigérant avec un boîtier de compresseur dans lequel un corps de cylindre (26) présentant un piston qui comprime un réfrigérant et un moteur électrique (5) entraînant le piston sont fixés l'un à l'autre, dans lequel le moteur électrique comprend un stator (6) muni d'un alésage de stator (13) dont le noyau d'enroulement (8) est muni de plusieurs gorges de logement (9) destinées à recevoir un enroulement de stator (11, 12) comprend un nombre quelconque de spires, de groupes d'enroulements et de pôles, dans lequel le noyau d'enroulement (8) est de préférence constitué de plusieurs lamelles de stator (16) reliées entre elles, et dans lequel l'enroulement de stator (11, 12) présente au niveau des faces d'extrémité (22, 23) du noyau d'enroulement (8) des têtes de bobine (11',12') qui sont disposées chacune en dehors des gorges de logement (9), dans lequel au moins une face d'extrémité (22, 23) du noyau d'enroulement (8) étant munie d'un élément isolant (7) qui recouvre pour l'essentiel la face d'extrémité (22, 23) et qui isole les têtes de bobine (11', 12') de l'enroulement de stator (11, 12) disposées sur cette au moins une face d'extrémité vis-à-vis du noyau d'enroulement (8), l'élément isolant (7) présentant dans une zone de bord (7a) périphérique par rapport à l'alésage de stator (13) un nombre quelconque de sections isolantes supplémentaires (14) en relief, qui isolent les têtes de bobine (11', 12') de l'enroulement de stator (11, 12) disposées sur l'au moins une face d'extrémité vis-à-vis de sections voisines du corps de cylindre (26), en particulier de saillies formant bride (27) du corps de cylindre (26) pouvant être fixées sur le noyau d'enroulement (8), **caractérisé en ce que** les têtes de bobine (11', 12') de l'enroulement de stator (11, 12) sont pressées contre l'élément isolant (7).

2. Compresseur à réfrigérant selon la revendication 1, **caractérisé en ce que** l'élément isolant (7) est pour l'essentiel en forme de plaque.

3. Compresseur de réfrigérant selon la revendication 1 ou 2, **caractérisé en ce que** la forme en circonférence de l'élément isolant (7) coïncide pour l'essentiel avec celle du noyau d'enroulement (8) et des lamelles de stator (16).

4. Compresseur à réfrigérant selon l'une des revendications 1 à 3, **caractérisé en ce que** les sections isolantes supplémentaires (14) sont disposées de façon mobile, de préférence rabattable, sur l'élément isolant (7).

5. Compresseur à réfrigérant selon l'une des revendications 1 à 4, **caractérisé en ce que** les sections isolantes supplémentaires (14) sont formées d'un seul tenant avec l'élément isolant (7).

6. Compresseur de réfrigérant selon l'une des revendications 1 à 5, **caractérisé en ce que** l'élément isolant (7) et les sections isolantes supplémentaires (14) sont fabriqués en PET.

7. Compresseur à réfrigérant selon l'une des revendications 1 à 6, **caractérisé en ce que** le logement de cylindre (26) présente quatre ou trois, de préférence deux, saillies formant bride (27) pouvant être fixées ou vissées sur le noyau d'enroulement (8), qui sont isolées chacune des têtes de bobine (11', 12') par une section isolante supplémentaire (14).

8. Compresseur de réfrigérant selon l'une des revendications 1 à 7, **caractérisé en ce que** l'élément isolant (7) et les sections isolantes supplémentaires (14) présentent une épaisseur de couche de < 2 mm.
